# EUROPEAN PATENT APPLICATION

(11) **EP 4 693 250 A1**
(43) Date of publication of application: **11.02.2026**
(21) Application number: 24780578.1
(22) Date of filing: 27.03.2024
(51) Int. Cl.: G08G 1/065, G01C 21/36, G08G 1/14

(54) **CHARGING MANAGEMENT SYSTEM**

(30) Priority: 29.03.2023 JP 2023053979
(71) Applicant: The Chugoku Electric Power Co., Inc., Hiroshima-shi, Hiroshima 730-8701 (JP)
(72) Inventor: FUKUHARA Yoji, Hiroshima-shi, Hiroshima 730-8701 (JP); KAMATA Ryosuke, Hiroshima-shi, Hiroshima 730-8701 (JP); TANABE Ryota, Hiroshima-shi, Hiroshima 730-8701 (JP); TAKANO Tomohiro, Hiroshima-shi, Hiroshima 730-8701 (JP); TOYOTA Mitsuo, Hiroshima-shi, Hiroshima 730-8701 (JP); TAKI Yoshihiko, Tokyo 102-0094 (JP)
(74) Representative: Hoffmann Eitle
(86) International application number: PCT/JP2024/012522
(87) International publication number: WO 2024/204477

(57) **Abstract**

An object of the present invention is to provide a system and a method capable of predicting a completion duration or a completion time at which charging of a mobile object by a charger is completed.

A system comprising at least one computer apparatus is provided. The system comprises a position specifier that specifies a position of a mobile object; and a predictor that predicts a completion duration or a completion time at which charging of the mobile object by a charger is completed in accordance with the specified position of the mobile object.

## Description

### Technical Field

The present invention relates to a system and a method.

### Background Art

In recent years, as electric vehicles have spread, chargers that charge electric vehicles have been installed. However, as compared with a case of refueling at a gas station, charging of an electric vehicle takes longer, and a waiting time may occur before charging.

Accordingly, for example, Patent Literature 1 discloses a system that guides to a charging facility in which a waiting time is shorter. In Patent Literature 1, charging demand prediction information is generated based on collected vehicle positions and battery remaining capacities, and a position of the charging facility for an electric vehicle and the number of own chargers. Then, the charging demand prediction information is transmitted to a navigation apparatus. When the charging demand prediction information is received in a state where guidance is provided based on a route to a destination, an in-vehicle navigation apparatus estimates a road section in which congestion in the charging facility is predicted based on the charging demand prediction information, and re-searches for a route to the destination for avoiding the road section.

### Citation List

### Patent Literature

Patent Literature 1: JP 2011-027433 A

### Summary of Invention

### Technical Problem

An object of the present invention is to provide a system and a method capable of predicting a completion duration or a completion time at which charging of a mobile object by a charger is completed.

### Solution to Problem

The present invention solves the above problem by any of the following:
[1] A system comprising at least one computer apparatus, comprising: a position specifier that specifies a position of a mobile object; and a predictor that predicts a completion duration or a completion time at which charging of the mobile object by a charger is completed in accordance with the specified position of the mobile object;
[2] The system according to [1], comprising: an object number specifier that specifies the number of mobile objects within a predetermined range set in association with a position of the charger, wherein, based on the specified number of mobile objects, the predictor predicts the completion duration or the completion time at which the charging of the mobile object by the charger within the predetermined range is completed;
[3] The system according to [1] or [2], wherein, based on the completion duration or the completion time specified for each mobile object, the predictor predicts the completion duration or the completion time at which the charging of the mobile object within the predetermined range by the charger is completed;
[4] The system according to any one of [1] to [3], comprising a transmitter that transmits the specified number of mobile objects and/or predicted completion duration or completion time to first computer apparatus;
[5] The system according to any one of [1] to [4], wherein the object number specifier specifies the number of mobile objects within a predetermined range defined for each charger;
[6] The system according to any one of [1] to [5], comprising: an inputter that receives mobile object information regarding the mobile object, wherein the predictor predicts the completion duration or the completion time in the mobile object corresponding to the mobile object information received as an input using a prediction model that is trained using mobile object information regarding the mobile object as input data and using the completion duration or the completion time at which charging in the mobile object is completed as output data;
[7] The system according to any one of [1] to [6], comprising: a plurality of first devices, wherein the mobile object includes a second device, wherein the system comprises a distance calculator that calculates a distance between the second device and each of the plurality of first devices based on a propagation time of a signal or information regarding the second device and each of the plurality of first devices, and wherein the position specifier specifies a position of the second device based on the calculated distance between the second device and each of the plurality of first devices;
[8] The system according to [7], wherein the distance calculator calculates the distance based on a time deviation between a clock of one first device and a clock of the second device;
[9] The system according to [7] or [8], comprising: a time deviation calculator that calculates a time deviation between one first device and the second device by executing communication between the one first device and the second device; and a time corrector that corrects a time in the second device based on the calculated time deviation;
[10] The system according to any one of [7] to [9], comprising: a phase deviation calculator that calculates a phase deviation between a clock of one first device and a clock of the second device by executing communication between one first device and the second device; and a phase corrector that corrects a phase in the second device based on the calculated phase deviation;
[11] A method performed in a system including at least one computer apparatus, the method comprising: a position specifying step of specifying a position of a mobile object; and a prediction step of predicting a completion duration or a completion time at which charging of the mobile object by a charger is completed in accordance with the specified position of the mobile object.

### Advantageous Effects of Invention

According to the present invention, it is possible to provide a system and a method capable of predicting a completion duration or a completion time at which charging of a mobile object by a charger is completed.

### Brief Description of Drawings

Fig. 1 is a block diagram illustrating a configuration of a system according to an embodiment of the present invention.
Fig. 2 is a block diagram illustrating a configuration of the first device according to the embodiment of the present invention.
Fig. 3 is a block diagram illustrating a configuration of a mobile object according to the embodiment of the present invention.
Fig. 4 is a block diagram illustrating a configuration of the server apparatus according to the embodiment of the present invention.
Fig. 5 is a flowchart illustrating position storage processing according to the embodiment of the present invention.
Fig. 6 is a flowchart illustrating distance calculation processing according to the embodiment of the present invention.
Fig. 7 is a flowchart illustrating the position specifying processing according to the embodiment of the present invention.
Fig. 8 is a flowchart illustrating prediction processing according to the embodiment of the present invention.
Fig. 9 is a schematic diagram illustrating a prediction method according to an embodiment of the present invention.
Fig. 10 is a flowchart illustrating output processing according to the embodiment of the present invention.

### Description of Embodiments

Hereinafter, embodiments of the invention will be described with reference to the accompanying drawings. It should be noted that the description regarding the effects illustrates one aspect of the effects of the embodiments of the invention and is not limited to those specifically mentioned herein. The order of the respective processes constituting the flowchart described hereinafter may be changed as long as such a change does not cause contradictions or inconsistencies in the processing contents. Furthermore, as long as it does not cause any contradictions or inconsistencies in the processing contents, some of the processes constituting the flowchart may be omitted, or new processes may be added. Furthermore, an apparatus that primarily executes each process of the flowchart may be changed to another apparatus, provided that such a change does not depart from the spirit of the present invention. In that case, it is also possible to modify the processing contents so as to avoid any contradictions or inconsistencies.

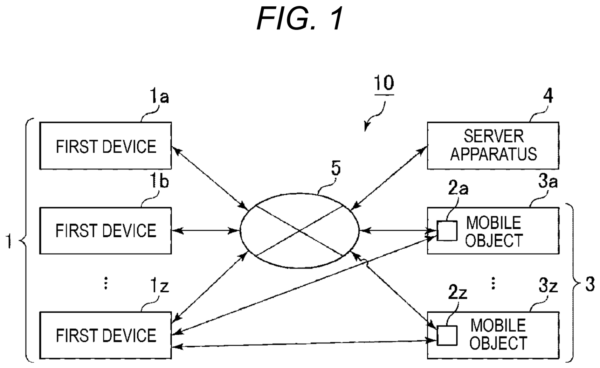

Fig. 1 is a block diagram illustrating a configuration of a system according to an embodiment of the present invention. As illustrated, a system 10 according to the present invention includes at least one computer apparatus. Specifically, the system includes a plurality of first devices 1 (1a to 1z), a mobile object 3 including a second device 2, and a server apparatus 4. As illustrated, the system 10 according to the present invention may include a plurality of mobile objects 3 (3a to 3z). One mobile object 3 corresponds to one second device 2. For example, the mobile object 3a includes a second device 2a. In the system 10 according to the present invention, it is preferable to include three or more first devices 1. The system 10 according to the present invention may include a user terminal (not illustrated).

The first device 1 and the second device 2 can be directly communicably connected. The first device 1 and the second device 2 can be communicably connected to the server apparatus 4 via a communication network 5. The mobile object 3 can be communicably connected to the server apparatus 4 via the communication network 5.

### [First Device]

The first device 1 is a device that serves as a reference for synchronizing clocks of the second devices 2. One first device 1 can also function as a first device in association with the plurality of second devices 2. Since the first device 1 is a device that serves as a reference for synchronizing clocks of the second devices 2, it is preferable to include a clock with higher accuracy. Further, even when a device functions as the second device 2 with regard to a certain first device 1, the device can also function as the first device with regard to another second device. There are a plurality of second devices 2 with regard to one first device 1, and each of the plurality of second devices 2 may function as a first device with regard to a plurality of other second devices, which implements a pyramidal relationship.

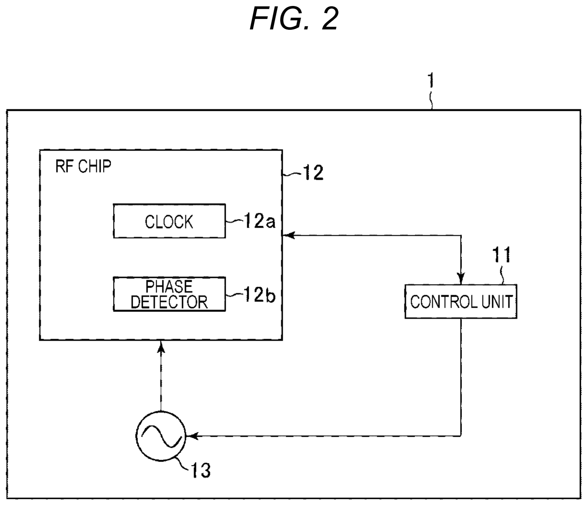

A configuration of the first device 1 according to the present invention will be described. Fig. 2 is a block diagram illustrating a configuration of the first device according to the embodiment of the present invention. The first device 1 includes a control unit 11, an RF chip 12, and an oscillator 13. The RF chip 12 includes a clock 12a and a phase detector 12b. The first device 1 may have other configurations as necessary in addition to the control unit 11, the RF chip 12, the oscillator 13, the clock 12a, and the phase detector 12b.

The control unit 11 is not particularly limited. For example, a microcomputer (microcontroller) can be used. The control unit 11 executes program execution processing based on a program and data. The RF chip 12 executes processing for receiving and transmitting a radio signal. Data received by the RF chip 12 is subjected to an arithmetic processing target by the control unit 11.

The oscillator 13 oscillates at a predetermined frequency and outputs a signal for providing an operation timing of each unit of an apparatus. As the oscillator 13, an atomic oscillator or a crystal oscillator can be used. The clock 12a clocks an output signal of the oscillator 13 as a vibration source and outputs time. The time clocked by the clock 12a is controlled by the control unit 11 such that the time is transmitted to the second device 2 via the RF chip 12. The phase detector 12b detects a phase of a carrier wave included in information received from the second device 2, and detects a phase of a signal oscillated by the oscillator 13 in the first device 1.

A location at which the first device 1 is installed is not particularly limited. The first device 1 is preferably installed at a fixed position at which the first device 1 is installed can be specified. For example, the first device 1 may be installed in a power transmission tower or the like for supporting an overhead electric wire line. A plurality of first devices 1 are installed. In order to accurately specify the position of the second device 2, the plurality of first devices 1 may be arranged at predetermined distances (for example, every 500 m). Positional information regarding the position at which the first device 1 is installed may be stored in the server apparatus 4 or the like in association with identification information with which the first device 1 can be identified.

### [Second Device and Mobile Object]

The second device 2 is included in the mobile object 3 and is connected to the mobile object 3 so that wired or wireless communication with each other is possible. In the system, a time of the second device 2 is synchronized with reference to the time clocked by the first device 1, and a phase of a signal generated by an oscillator in the second device 2 is synchronized with reference to the phase of the signal generated by the oscillator in the first device 1.

The second device 2 may be able to function as the first device 1 with respect to another second device. A time of the other second device is synchronized based on the time clocked by the second device 2, and the phase of the signal generated by the oscillator in the other second device is synchronized based on the phase of the signal generated by the oscillator in the second device 2.

"The second device 2 is included in the mobile object 3" includes both incorporating the second device 2 into the mobile object 3 and attaching the second device 2 to the outside of the mobile object 3. "The second device 2 is included in the mobile object 3" also includes a case where the second device 2 and the mobile object 3 share the same control unit and are controlled by the control unit. The positional information of the second device 2 may be stored in the server apparatus 4 or the like in association with identification information with which the second device 2 can be identified or identification information with which the mobile object 3 including the second device 2 can be identified.

The mobile object 3 according to the present invention will be described. The mobile object 3 includes a battery and operates by electric power. The mobile object 3 is a concept including not only a vehicle but also an aircraft and a ship. Specifically, the present invention can be applied to a vehicle such as a hybrid vehicle and an electric vehicle, an aircraft such as a drone, a helicopter, an airship, a glider, and a jet aircraft, or any vehicle that can be boarded by people, such as a ship such as a ferry and a cargo ship. The mobile object 3 may be a conventional vehicle driven by a person or may be an automatic driving vehicle. As the mobile object 3, a known object can be used except that the second device 2 is included.

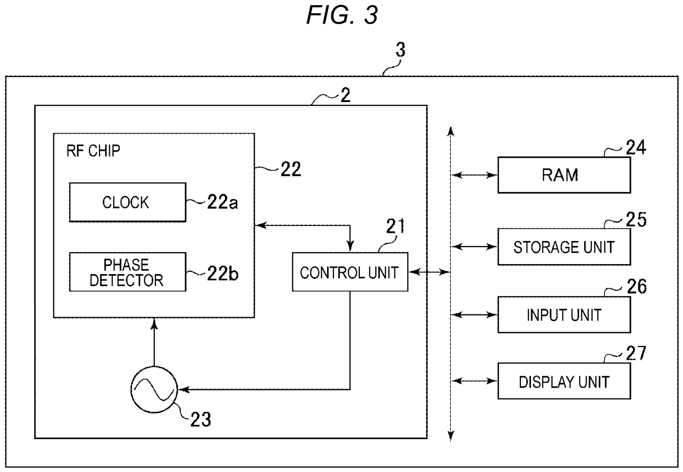

Configurations of the second device 2 and the mobile object 3 will be described. Fig. 3 is a block diagram illustrating a configuration of a mobile object according to the embodiment of the present invention. The mobile object 3 includes a second device 2, a RAM 24, a storage unit 25, an input unit 26, and a display unit 27 that are connected to each other by a bus. The mobile object 3 may include a sensor that detects a remaining battery level of the mobile object. The second device 2 includes a control unit 21, an RF chip 22, and an oscillator 23 that are connected to each other by a bus.

The control unit 21 includes a CPU and a ROM. The control unit 21 executes a program stored in the storage unit 25 and controls the second device 2 and the mobile object 3. The RAM 24 is a work area of the control unit 21. The storage unit 25 is a storage area where programs and data are stored. The control unit 21 executes arithmetic processing based on a program and data read from the RAM 24 and the data input by the input unit 26.

The RF chip 22 includes a clock 22a and a phase detector 22b. The second device 2 may include other configurations as necessary in addition to the control unit 21, the RF chip 22, the oscillator 23, the clock 22a, and the phase detector 22b. The RF chip 22 can transmit and receive data to and from other computer apparatuses. The RF chip 22 can also receive a GPS signal. The data received by the RF chip 22 is loaded into the RAM 24 and is an arithmetic processing target by the control unit 21.

The oscillator 23 oscillates at a predetermined frequency and outputs a signal for giving an operation timing of each unit of the apparatus. As the oscillator 23, for example, a crystal oscillator can be used. The clock 22a clocks the output signal of the oscillator 23 as a vibration source and outputs a time. The time clocked by the clock 22a is controlled by the control unit 21 such that the time is transmitted to the first device 1 via the RF chip 22. The phase detector 22b detects a phase of a carrier wave included in the information received from the first device 1 and detects the phase of the signal oscillated by the oscillator 23 of the second device 2.

The display unit 27 has a display screen. The control unit 21 outputs a video signal for displaying an image on the display screen in accordance with a result of the arithmetic processing. Here, the display screen of the display unit 27 may be a touch panel including a touch sensor. In this case, the touch panel functions as the input unit 26.

As described above, the case where the second device 2 and the mobile object 3 share the same control unit 21 and are controlled by the control unit 21 has been described. However, the second device 2 and the mobile object 3 may include different control units.

In the embodiment of the present invention, the positional information of the mobile object 3 is managed with latitude, longitude, and altitude, or coordinates of a coordinate system (for example, XYZ coordinates of an orthogonal coordinate system).

### [Server Apparatus]

Next, a server apparatus according to the present invention will be described.

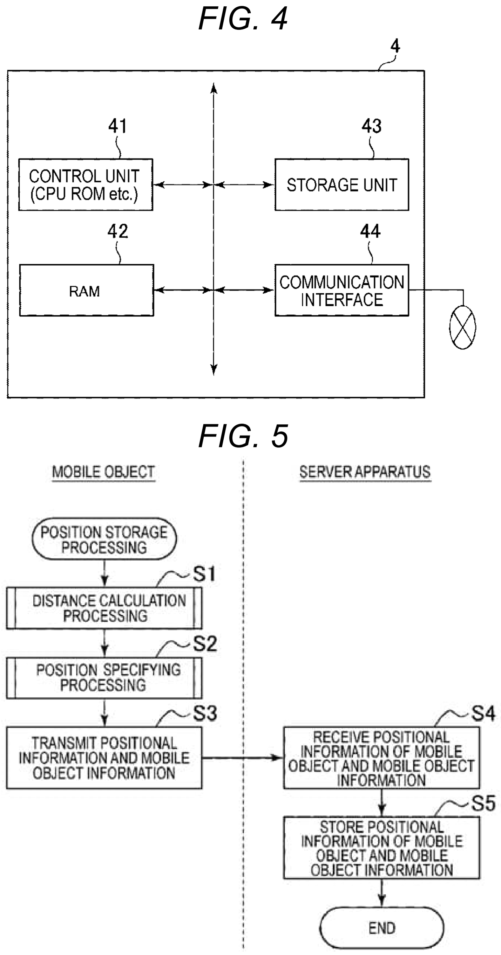

Fig. 4 is a block diagram illustrating a configuration of the server apparatus according to the embodiment of the present invention. The server apparatus 4 includes at least a control unit 41, a RAM 42, a storage unit 43, and a communication interface 44 that are connected to each other via an internal bus.

The control unit 41 includes a CPU and a ROM, executes a program stored in the storage unit 43, and controls the server apparatus 4. The control unit 41 includes an internal timer that clocks a time. The RAM 42 is a work area of the control unit 41. The storage unit 43 is a storage area where programs and data are stored. The control unit 41 reads a program and data from the RAM 42, and executes program execution processing based on information or the like received from the first device 1, the second device 2, the mobile object 3, or the user terminal.

The server apparatus 4 may communicate with the first device 1, the second device 2, the mobile object 3, or the user terminal via a smart meter.

### [User Apparatus]

Next, the user terminal according to the present invention will be described. The user terminal is operated by a user who uses a mobile object. The user terminal may be a stationary type terminal installed at home or the like or may be a portable type terminal carried when the user moves.

The user terminal has a configuration similar to that of the server apparatus 4 and includes, for example, a control unit, a RAM, a storage unit, a communication interface, an input unit, and a display unit that are connected to each other via an internal bus. The second device 2 may be included. The user terminal is preferably a computer apparatus that includes an input unit, a display unit, and a control unit, such as a tablet terminal, a smartphone, or a desktop or notebook type personal computer.

### [Position Storage Processing]

Next, position storage processing according to an embodiment of the present invention will be described. The position storage processing is processing for transmitting positional information specified by the mobile object 3 and information regarding the mobile object 3 to the server apparatus 4 and storing the positional information and the information. Fig. 5 is a flowchart illustrating position storage processing according to the embodiment of the present invention.

The position storage processing may be executed during an operation of the mobile object 3. The position storage processing can be executed every predetermined time or whenever a predetermined condition is satisfied. Any frequency at which the position storage processing is executed can be set. For example, the position storage processing can be set to be executed once every 5 minutes. When the mobile object 3 is located within a predetermined range, the processing may be executed.

The predetermined range is set in association with the position of a charger. When the position of the charger changes, the predetermined range also changes accordingly. For example, a range including the position of the charger can be a predetermined range, or a range including at least one point within a predetermined distance from the position of the charger can be a predetermined range (that is, a range including at least one point in the vicinity of the charger can be set to a predetermined range). The predetermined distance can be appropriately set to, for example, 50 cm, 1 m, or 2 m.

The predetermined range is preferably determined for each charger and can be appropriately set in accordance with, for example, a positional relationship with another charger, a situation of an area where there is the charger, or the like. The predetermined range is preferably set in accordance with a region where the mobile objects are arranged when the mobile objects wait in order to use the charger. More specifically, the predetermined range is preferably set along a road used by the mobile object when the mobile object executes charging by the charger. A part of the side surface of the charger preferably faces this road. The area and shape of the predetermined range may be different for each charger.

First, in the mobile object 3, distance calculation processing for calculating a distance between each of the plurality of first devices 1 and the second device 2 based on information or signal propagation time between each of the plurality of first devices 1 and the second device 2 is executed (step S1). Since the second device 2 is included in the mobile object 3, it can be said that the distance calculation processing is processing for calculating a distance between each of the plurality of first devices and the mobile object 3. Details of the distance calculation processing will be described below.

Subsequently, the mobile object 3 executes position specifying processing for specifying the position of the second device based on the distance between each of the plurality of first devices and the second device calculated in the distance calculation processing (step S2). Since the second device 2 is provided in the mobile object 3, it can be said that the position specifying processing is processing for specifying the position of the mobile object 3. Details of the position specifying processing will be described below.

Subsequently, the specified positional information and the mobile object information regarding the mobile object are transmitted from the mobile object 3 to the server apparatus 4 (step S3). In the server apparatus 4, the positional information and the mobile object information are received (step S4) and are stored in the storage unit 43 (step S5). With the above processing of steps S1 to S5, the position storage processing ends.

In step S5, the received positional information and mobile object information are stored in the storage unit 43 in association with time information. The time information is a time at which the position of the mobile object 3 is specified in step S1, a time at which the information is transmitted in step S3, or a time at which the information is received in step S4.

The mobile object information is information necessary for predicting a time (completion duration) until charging of the mobile object is completed. Examples of the mobile object information include a vehicle type of a mobile object, a type of a battery, a capacity of the battery, and a remaining level of the battery. Specifically, the mobile object information includes a capacity and a remaining level of a battery, and may further include a mobile object or a type of battery. This is because the type of battery can be specified depending on the type of mobile object. The capacity of the battery, the type of mobile object, and the type of battery are stored in the storage unit 25 of the mobile object 3. In addition, as the remaining level of the battery, the remaining level at a time at which step S2 is executed is specified by a sensor.

As described above, the configuration of specifying the positional information of the mobile object 3 by the distance calculation processing in step S1 and the position specifying processing in step S2 has been described. However, the processing in steps S1 and S2 may be omitted, and the positional information of the mobile object 3 may be specified by receiving a GPS signal.

As described above, the configuration in which the positional information and the mobile object information specified in step S3 are transmitted and stored in the server apparatus 4 in step S5 has been described. However, a configuration in which either the positional information or the mobile object information is transmitted and either the positional information or the mobile object information is stored in the server apparatus 4 may be adopted.

For example, in step S3, when mobile object 3 is not located within the predetermined range of the charger, the mobile object 3 may transmit only the positional information. When the mobile object 3 is located within the predetermined range of the charger, the mobile object 3 may transmit the positional information and the mobile object information. Since the position of the mobile object 3 does not move during charging of the mobile object 3, the mobile object 3 may transmit only the mobile object information. In this case, the processing of steps S1 and S2 can be omitted. That is, the information transmitted from the mobile object 3 to the server apparatus 4 can be made different in accordance with a predetermined condition.

### [Distance Calculation Processing]

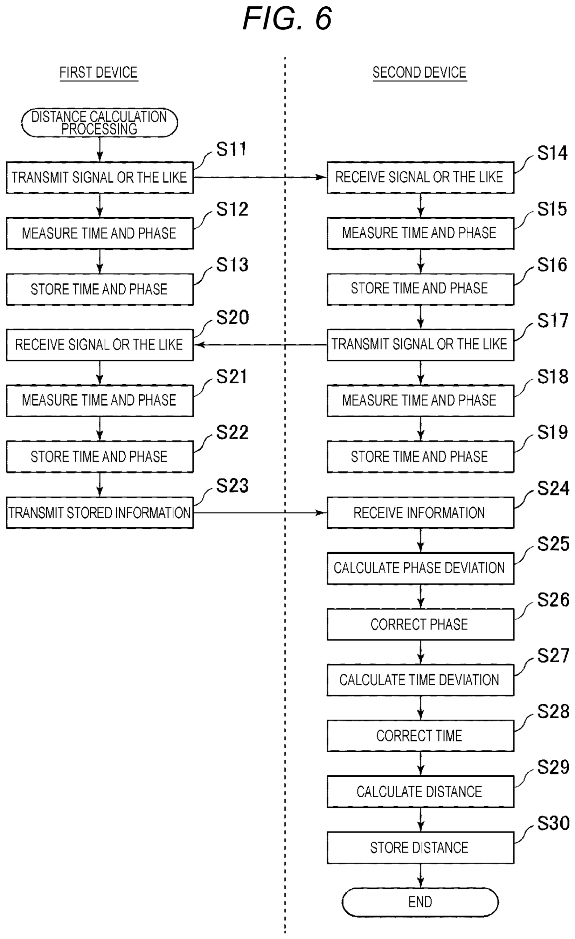

Next, distance calculation processing according to the embodiment of the present invention will be described. Fig. 6 is a flowchart illustrating distance calculation processing according to the embodiment of the present invention. In the following flowchart, processing for calculating the distance between the one first device 1 and the second device 2 will be described.

Setting can be executed such that, after the distance calculation processing, the position specifying processing and prediction processing to be described below are executed within a predetermined time (for example, within a few seconds). In the case of this setting, since the mobile object 3 moves slightly from the position specified in the distance calculation processing or does not move, it is possible to curb a deviation between the position specified in the distance calculation processing and the position of the moving mobile object 3 in real time.

First, information or a signal is transmitted from the first device 1 to the second device 2 (step S11). Information or a signal transmitted from the first device 1 to the second device 2 is not particularly limited. The first device 1 clocks a time at which the information or the signal is transmitted in step S11 and measures a phase during the transmission (step S12). Then, the clocked time and the measured phase are stored in a memory in the control unit 11 (step S13).

Subsequently, the second device 2 receives the information or the signal from the first device 1 (step S14). The second device 2 clocks a time at which the information or the signal is received in step S14 and measures a phase during the reception (step S15). Then, the clocked time and the measured phase are stored in the memory or the storage unit 25 in the control unit 21 (step S16).

Subsequently, the second device 2 transmits information or a signal to the first device 1 (step S17). The information or the signal transmitted from the second device 2 to the first device 1 is not particularly limited. The second device 2 clocks a time at which the information or the signal is transmitted in step S17 and measures a phase during the transmission (step S18). Then, the clocked time and the measured phase are stored in the memory or the storage unit 25 in the control unit 21 (step S19).

The first device 1 receives the information or the signal transmitted in step S17 (step S20). The first device 1 clocks a time at which the information or the signal is received in step S20 and measures a phase during the reception (step S21). Then, the clocked time and the measured phase are stored in the memory in the control unit 11 (step S22). When step S22 ends, the processing proceeds to step S23.

In the first device 1, the RF chip 12 transmits information regarding the time and the phase during the transmission of the signal in step S11 stored in step S13 and information regarding the time and the phase during the reception of the signal in step S20 stored in step S22 to the second device 2 (step S23).

Then, the second device 2 receives the information regarding the time at which the first device 1 transmitted the information or the signal and the phase during the transmission in step S11 and the information regarding the time at which the first device 1 receives the information or the signal and the phase during the reception in step S20 (step S24).

Subsequently, the control unit 21 of the second device 2 calculates a phase deviation between the phase of the signal generated by the oscillator 13 of the first device 1 and the phase of the signal generated by the oscillator 23 of the second device 2 (step S25). The phase deviation can be calculated based on a phase difference between a phase of a carrier wave included in information or a signal transmitted from the first device 1 to the second device 2 and a phase of a signal oscillated by the oscillator 23 of the second device 2 when the second device 2 receives the information or the signal, and a phase difference between a phase of a carrier wave included in information or a signal transmitted from the second device 2 to the first device 1 and a phase of a signal oscillated by the oscillator 13 of the first device 1 when the first device 1 receives the information or the signal.

The phase of the carrier wave included in the information or the signal transmitted from the first device 1 to the second device 2 is the phase of the information or the signal transmitted in step S11. The information regarding the phase is transmitted from the first device 1 to the second device 2 in step S23. The phase of the signal oscillated by the oscillator 23 of the second device 2 when the second device 2 receives the information or the signal is the phase of the information or the signal received in step S14. The information regarding the phase is measured by the second device 2 in step S15 and is stored in step S16. The phase of the carrier wave included in the information or the signal transmitted from the second device 2 to the first device 1 is, for example, the phase of the information or the signal transmitted in step S17. The information regarding the phase is stored by the second device 2 in step S19. The phase of the signal oscillated by the oscillator 13 of the first device 1 when the first device 1 receives the information or the signal is, for example, the phase of the information or the signal received in step S20. The information regarding the phase is measured in step S21 and is transmitted from the first device 1 to the second device 2 in step S23.

Here, the phase of the carrier wave included in the information or the signal transmitted from the first device 1 to the second device 2 is a concept including not only the phase of the carrier wave included in the information or the signal transmitted from the first device 1 to the second device 2 but also the phase of the carrier wave included in the signal obtained by mixing down the information or the signal. Similarly, the phase of the carrier wave included in the information or the signal transmitted from the second device 2 to the first device 1 is a concept including not only the phase of the carrier wave included in the information or the signal transmitted from the second device 2 to the first device 1 but also the phase of the carrier wave included in the signal obtained by mixing down the information or the signal.

When the phase difference between the phase of the carrier wave included in the information or the signal transmitted from the first device 1 to the second device 2 and the phase of the signal oscillated by the oscillator 23 of the second device 2 when the second device 2 receives the information or the signal is defined as ΔΦ_{S}, and the phase difference between the phase of the carrier wave included in the information or the signal transmitted from the second device 2 to the first device 1 and the phase of the signal oscillated by the oscillator 13 of the first device 1 when the first device 1 receives the information or the signal is defined as ΔΦ_{M}, a phase difference ΔΦ_{P} caused due to a signal propagating between the first device 1 and the second device 2 can be calculated from an arithmetic mean of the phase difference ΔΦ_{S} and the phase difference ΔΦ_{M}. That is, the phase difference ΔΦ_{P} can be calculated by Formula (1): ΔΦ_{P} = 1/2 × (ΔΦ_{S} + ΔΦ_{M}).

When the phase deviation between the first device 1 and the second device 2 is defined as ΔΦ_{C}, a relationship expressed by Formula (2): ΔΦ_{M} = ΔΦ_{P} + (- ΔΦ_{C}) is established. Therefore, the phase deviation ΔΦ_{C} can be calculated by subtracting the phase difference ΔΦ_{M} from the phase difference ΔΦ_{P}. That is, the phase deviation ΔΦ_{C} can be calculated by Formula (3): ΔΦ_{C} = 1/2 × (ΔΦ_{S} - ΔΦ_{M}). In step S25, the phase deviation between the first device 1 and the second device 2 is calculated using Formula (3).

Here, the phase deviation ΔΦ_{C} is calculated by Formula (3), but the phase deviation ΔΦ_{C} to be calculated may be obtained by further subtracting 2π or 4π, that is, 2nπ. n may take 0 or a positive integer. Therefore, it is also possible to specify whether n is 0, 1, or 2 (that is, whether a value obtained by further subtracting 2nπ from the phase deviation ΔΦ_{C} obtained by Formula (3) is an original phase deviation or whether a value obtained without the subtraction is the original phase deviation) based on a propagation time T_{P} to be described below or a time difference between the first device 1 and the second device 2.

A signal transmitted from the first device 1 to the second device 2 and a signal transmitted from the second device 2 to the first device 1 may start from a state in which an output at the start of transmission is not 0 but any value. In this case, it is necessary to correct the phase deviation ΔΦ_{C} by measuring the phase and the transmission time at the start of transmission. By normally making the phase at the start of transmission constant and executing the transmission at a predetermined time, it is possible to omit processing for correcting ΔΦ_{C} after measuring the phase and the transmission time at the start of transmission.

The second device 2 corrects the phase of the signal generated by the oscillator 23 of the second device 2 to achieve synchronization with the signal generated by the oscillator 13 of the first device 1 based on the calculated phase deviation ΔΦ_{C} (step S26). The correction of the phase in step S26 is controlled and executed by the control unit 21. The phase deviation of the oscillator 23 of the second device 2 occurs due to the influence of the environment around the second device 2. By executing the synchronization processing periodically in this manner, the clock 22a of the second device 2 can be continuously clocked with high accuracy.

Subsequently, in the first device 1, the time difference between the first device 1 and the second device 2 is calculated based on a time at which the first device 1 transmits information or a signal to the second device 2, a time at which the second device 2 transmits information or a signal to the first device 1, a time at which the first device 1 transmits information or a signal and the second device 2 receives the information or a signal and clocks a time, and a time at which the second device 2 transmits information or a signal and the first device 1 receives the information or the signal and clocks a time (step S27).

The time at which the first device 1 transmits information or a signal to the second device 2 is the time at which the information is transmitted in step S11. Information regarding the time is transmitted from the first device 1 to the second device 2 in step S23. The time at which the information or the signal is transmitted from the second device 2 to the first device 1 is the time at which the information or the signal is transmitted in step S17. The information regarding the time is stored by the second device 2 in step S19. Subsequently, the time at which information or a signal is transmitted from the first device 1 and the second device 2 receives and clocks the time is the time at which the information is received in step S14. The information regarding the time is recorded by the second device 2 in step S15 and stored in step S16. The time at which information or a signal is transmitted from the second device 2 and the first device 1 receives and clocks the information or the signal is the time at which the information or the signal is received in step S20. The information regarding the time is clocked in step S21 and transmitted from the first device 1 to the second device 2 in step S23.

When the time at which the first device 1 transmits information or a signal to the second device 2 is defined as T_{M}, the time at which the second device 2 transmits information or a signal to the first device 1 is defined as T_{S}, the time at which the first device 1 transmits information or a signal and the second device 2 receives the information or the signal and clocks the time is defined as T_{MS}, and a time at which the second device 2 transmits information or a signal and the first device 1 receives the information or the signal and clocks the time is defined as T_{SM}, the time difference between the first device 1 and the second device 2 can be calculated by Formula (4): T_{L} = 1/2 × ((T_{SM} - T_{S}) - (T_{MS} - T_{M})). In step S27, the time difference between the first device 1 and the second device 2 is calculated by Formula (4). The second device 2 corrects the time in the second device 2 to achieve synchronization with the time of the first device 1 based on the calculated time difference (step S28).

Subsequently, a distance between the first device 1 and the second device 2 is calculated (step S29). In step S29, the distance between the first device 1 and the second device 2 can be calculated by calculating a propagation time in which information or a signal propagates between the first device 1 and the second device 2 by a substantial difference between a time at which the first device 1 transmits the information or the signal and a time at which the second device 2 receives the information or the signal, and multiplying the propagation time by a propagation speed (for example, the speed of light) of the information or the signal. A difference between the time at which the first device 1 transmits the information or the signal and the time at which the second device 2 receives the information or the signal can be calculated based on, for example, a time at which the first device 1 transmits the information or the signal to the second device 2 in step S11 (a time at which the first device 1 transmits the information or the signal to the second device 2 in step S23), a time at which the second device 2 receives the information or the signal from the first device 1 in step S14 and the information or the signal is stored in the memory or the storage unit 25 in step S16, and the time difference calculated in step S27.

In step S29, the distance between the first device 1 and the second device 2 can be calculated by calculating a propagation time in which information or a signal propagates between the first device 1 and the second device 2 by a substantial difference between a time at which the second device 2 transmits information or a signal and a time at which the first device 1 receives the information or the signal, and multiplying the propagation time by a propagation speed (for example, the speed of light) of the information or the signal. The difference between the time at which the information or the signal is transmitted by the second device 2 and the time at which the first device 1 receives the information or the signal can be calculated based on, for example, the time at which the information or the signal is transmitted from the second device 2 to the first device 1 in step S17 and stored in the memory or the storage unit 25 in step S19, the time at which the information or the signal is received by the first device 1 in step S20 (transmitted from the first device 1 to the second device 2 in step S23), and the time difference calculated in step S27.

The distance between the first device 1 and the second device 2 calculated in step S29 is stored in the memory or the storage unit 25 in the control unit 21 of the second device 2 in association with, for example, time information regarding the calculated time or the like and identification information with which the first device 1 can be identified (or positional information of the first device 1) (step S30). When step S30 is executed, the distance calculation processing ends.

By executing the processing from steps S11 to S30, can not only a time deviation and a phase deviation between the first device 1 and the second device 2 be corrected, but the distance between the first device 1 and the second device 2 can also be calculated. While the time deviation between the first device 1 and the second device 2 is corrected in step S28, it is not always necessary to correct the time deviation, and the distance between the first device 1 and the second device 2 can be calculated without correcting the time deviation based on the time deviation calculated in step S27. That is, the distance can be calculated based on the time difference between a clock of the one first device and a clock of the second device.

While the phase deviation between the first device 1 and the second device 2 is corrected in step S26, it is not always necessary to correct the phase deviation, and the distance between the first device 1 and the second device 2 can be calculated without correcting the phase deviation. That is, the distance can be calculated based on the phase deviation between the clock of the one first device and the clock of the second device.

While the time deviation and the phase deviation between the first device 1 and the second device 2 are corrected and the distance between the first device 1 and the second device 2 is calculated by executing the processing from steps S11 to S30, it is also possible to separately execute processing for correcting the time deviation between the first device 1 and the second device 2, processing for correcting the phase deviation between the first device 1 and the second device 2, and processing for calculating the distance between the first device 1 and the second device 2.

In the processing for calculating the distance between the first device 1 and the second device 2, the distance between one second device 2 and each of the plurality of first devices 1 can be calculated. When the position of the second device 2 is specified, as will be described below, the distance between the first device 1 and the second device 2 is specified by the number of first devices 1 required for specifying the position. Here, even when the distance to each of the plurality of first devices 1 is calculated for one second device 2, time deviation correction processing and phase deviation correction processing may be executed only by one first device 1, and the time deviation correction processing and the phase deviation correction processing may not be executed during communication with the other first devices 1.

Here, the second device 2 calculates the distance between the first device 1 and the second device 2. Instead of the second device 2, the first device 1 may calculate the distance between the first device 1 and the second device 2 through the same processing as step S29. When the distance is calculated by the first device 1, the distance between the first device 1 and the second device 2 is stored in the memory in the control unit 11 in association with time information regarding the calculated time or the like and the identification information with which the second device 2 can be identified.

Instead of the second device 2, the server apparatus 4 may calculate the distance between the first device 1 and the second device 2 through the same processing as step S29. When the distance is calculated in the server apparatus 4, information necessary for the calculation is received from the first device 1 and/or the second device 2. When the distance is calculated in the server apparatus 4, the distance between the first device 1 and the second device 2 is stored in the storage unit 43 of the server apparatus 4 in association with time information regarding the calculated time or the like, identification information with which the first device 1 can be identified (or positional information of the first device 1), and identification information with which the second device 2 can be identified.

While the distance between the first device 1 and the second device 2 is calculated here, a distance between one second device 2 and the second device 2 different from the one second device 2 can be calculated when there are a plurality of second devices 2. In this case, a propagation time in which information or a signal propagates between the one second device 2 and the different second device 2 is calculated by a substantial difference between a time at which information or a signal is transmitted by the one second device 2 and a time at which information or a signal is received by a different second device 2, and a distance between the one second device 2 and the different second device 2 can be calculated by multiplying the propagation time by a propagation speed (for example, the speed of light) of the information or the signal.

As described above, the mode in which the distance between the one first device 1 and the second device 2 is calculated has been described. However, in the present system, similarly to the calculation of the distance between the one first device 1 and the second device 2, a distance between the second device 2 and the first device 1 different from the one first device 1 can be calculated for each of the plurality of first devices 1.

In the present embodiment, the distance calculation processing is executed every predetermined time or whenever a predetermined condition is satisfied. However, it is not always necessary to execute all steps of the distance calculation processing every time. For example, steps related to phase correction in steps S25 and S26 and time correction in steps S27 and S28 can be omitted.

### [Position Specifying Processing]

Next, position specifying processing according to an embodiment of the present invention will be described.

In order to specify the position of the second device 2, it is assumed that a distance to each of the plurality of first devices 1 is calculated for one second device 2 in the distance calculation processing. For example, when one second device 2 and the plurality of first devices 1 are at the same height, that is, when there are these devices on the same XY plane, the position of the second device 2 (for example, XY coordinates of the second device 2) can be specified based on the distance between one second device 2 and each of the three first devices 1 and the position of each of the three first devices 1. Accordingly, when one second device 2 and the plurality of first devices 1 are at the same height, the number of pieces of data regarding the distance between the first device 1 and the second device 2 necessary for specifying the position is 3.

For example, when the height of one second device 2 is different from the height of at least one of the plurality of first devices 1 and the first devices 1 are not on the same plane, the position (for example, XYZ coordinates of the second device 2 or latitude, longitude, and altitude) of the second device 2 can be specified based on the distance between one second device 2 and each of the four first devices 1 and the position of each of the four first devices 1. Accordingly, when the height of one second device 2 is different from the height of at least one of the plurality of first devices 1, and the first devices 1 are not on the same plane, the number of pieces of data regarding the distance between the first device 1 and the second device 2 necessary for specifying the position is 4.

That is, the system 10 according to the present invention preferably includes at least four first devices 1. This is because the first device 1 and the second device 2 are not at the same height when the first device 1 is fixed to a power transmission steel tower. In this case, in the system 10, it is preferable that the four first devices 1 are not on the same plane. For example, an installation height of at least one first device 1 is preferably different from installation heights of the other three first devices 1. In this way, even when the second device 2 is located at any position, it is possible to specify the position in three dimensions.

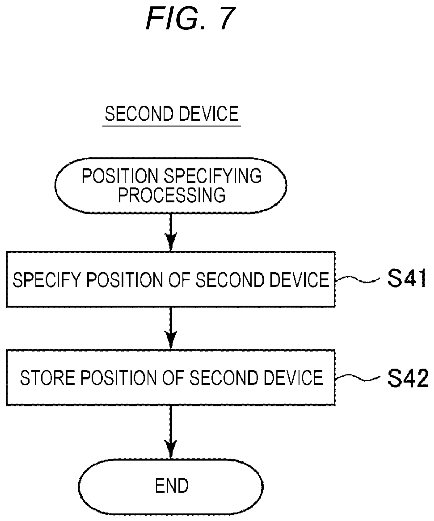

Fig. 7 is a flowchart illustrating the position specifying processing according to the embodiment of the present invention. In the following flowchart, processing for specifying a position in the second device 2 will be described.

In the position specifying processing, the position of the second device 2 is specified based on the distance between each of the plurality of first devices 1 and the second device 2 and the position of the first device 1 (step S41). The position of the first device may be stored in advance in any of the first device 1, the second device 2, the mobile object 3, and the server apparatus 4 that executes the position specifying processing. Calculation processing for specifying the position of the second device 2 is not particularly limited.

The specified position of the second device 2 is stored in the memory in the control unit 21 of the second device 2 or the storage unit 25 of the mobile object 3 in association with the time information regarding the calculated time (the time information regarding the time at which the distance is calculated or the time information regarding the time at which the position is specified), the identification information of the first device 1 (or the positional information of the first device 1), and the identification information of the second device 2 (step S42). With steps S41 and S42, the position specifying processing ends.

The distance between each of the plurality of first devices 1 and the second device 2 that is sources with which the position of the second device 2 is specified in step S41, is preferably calculated at the same time or a close time (for example, the distance is calculated when the time at which each of the plurality of first devices and the second device measure the propagation time of the information or the signal is the same time or a close time). Here, the close time is not particularly limited, but is preferably a time within a range of a predetermined time from one time. By using the distance between each of the plurality of first devices 1 and the second device calculated at the same time or a close time, a more accurate position at that time can be specified.

Here, the distance between each of the plurality of first devices 1 and the second device 2 is calculated, and the position of the second device 2 is specified based on the calculated distance. However, when there is a plurality of second devices 2, the distance between the one second device 2 and each of the plurality of second devices 2 different from the one second device 2 is calculated, and the position of the one second device 2 can be specified based on the calculated distance.

Here, in the second device 2, the position of the second device 2 is specified. However, instead of the second device 2, the position of the second device 2 may be specified by the first device 1 or the server apparatus 4 through processing similar to step S41. When the position specifying processing is executed in the first device 1 or the server apparatus 4, the information regarding the distance (the distance calculated in step S29) between each of the plurality of first devices 1 and the second device 2 is transmitted to the first device 1 or the server apparatus 4 to be used in association with the time information regarding the calculated time, the identification information of the first device 1 (or the positional information of the first device 1), and the identification information of the second device 2. When the position of the second device 2 is specified by the first device 1 or the server apparatus 4, the specified position of the second device 2 is stored in the memory in the control unit 11 or the storage unit 43 of the server apparatus 4 in association with the time information regarding the calculated time, the identification information of the first device 1 (or the positional information of the first device 1), and the identification information of the second device 2.

### [Prediction Processing]

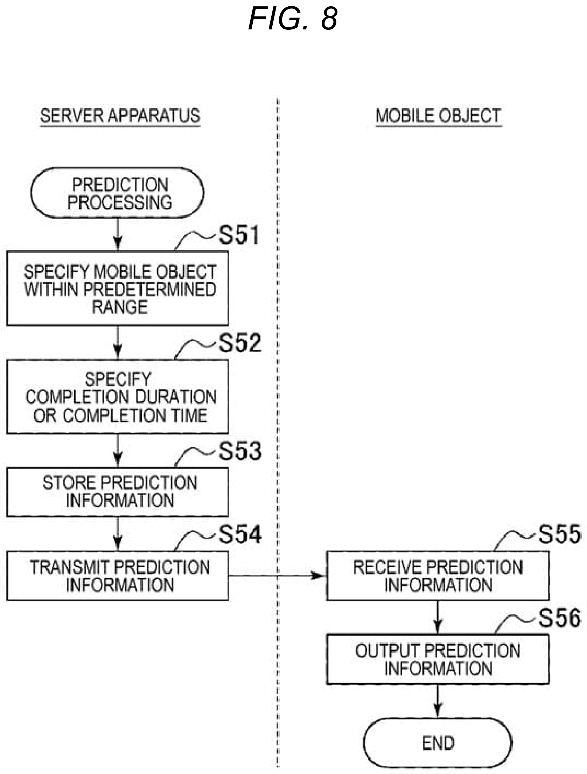

Next, prediction processing according to an embodiment of the present invention will be described. The prediction processing is processing for predicting a completion duration or a completion time at which charging of the mobile object by the charger is completed in accordance with the specified position of the mobile object. Fig. 8 is a flowchart illustrating prediction processing according to the embodiment of the present invention.

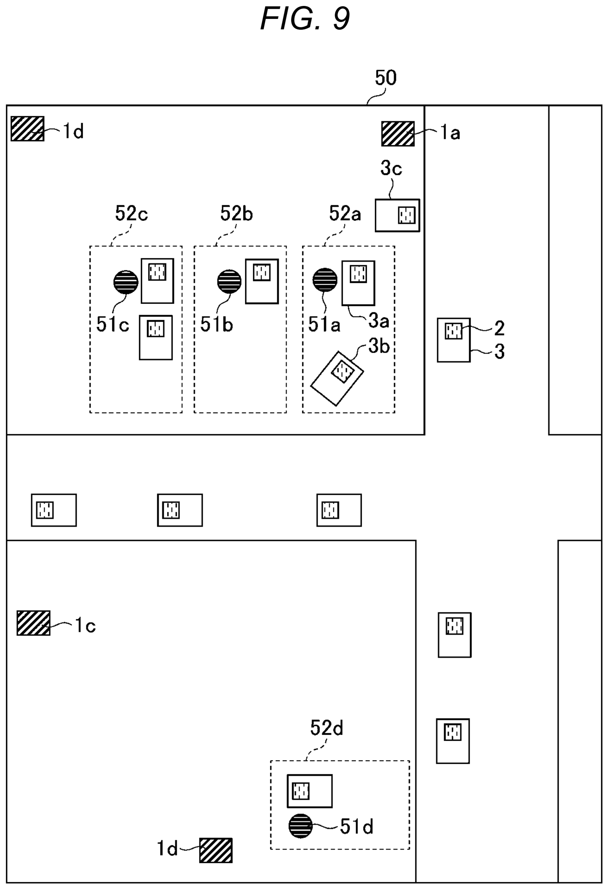

Fig. 9 is a schematic diagram illustrating a prediction method according to an embodiment of the present invention. In Fig. 9, there are chargers 51 (51a to 51d) at a predetermined place 50. Regions 52 (52a to 52d) within a predetermined range are defined for the chargers 51. Map information of the predetermined place 50 is stored in the server apparatus 4. Positional information of the chargers 51 is stored in the server apparatus 4 in association with identification information (charger IDs) that can identify the chargers 51 and the positional information of the regions 52.

The positions, the ranges, and/or the shapes of the regions 52 are not particularly limited. The region 52 may be, for example, a different region for each charger, or the regions may overlap, may be the same region, or may not overlap when a plurality of chargers are located nearby. Specifically, in the region 52, it is preferable to set a region where the mobile object 3 may wait for charging by the charger 51. The region 52 may be set in accordance with a capacity of the charger such as a charge capacity. The region 52 may be a predetermined distance (for example, within a radius of 3 m) from the charger.

As the positional information of the charger 51 and the positional information of the region 52, latitude, longitude, and altitude, or an XYZ coordinate system is stored in the server apparatus 4. The first devices 1a to 1d for specifying the position of the second device 2 are included in the predetermined place 50. As the positional information of the first devices 1a to 1d, latitude, longitude, and altitude, or an XYZ coordinate system is stored in the server apparatus 4.

In the following flowchart, a case where the completion duration of the completion time at which the charging of the mobile object is completed in the charger 51a is predicted will be described. First, the server apparatus 4 specifies a mobile object located in the region 52a within the predetermined range of the charger 51a (step S51). In Fig. 9, the mobile objects 3a and 3b located in the region 52a are specified. In step S51, the server apparatus 4 may specify the number of mobile objects within a predetermined range for each charger by adding the number of specified mobile objects.

In step S51, a mobile object located in the predetermined region 52 can be specified by referring to the positional information of the mobile object 3 stored in step S5 of the position storage processing. When the position storage processing is executed, the prediction processing may be executed within a predetermined time (for example, within several seconds). Alternatively, the position storage processing may be executed within a predetermined time before the prediction processing is executed. Accordingly, it is possible to reduce an error between a position of the mobile object specified to be located in the predetermined region 52 and an actual position of the mobile object at a time at which step S51 is executed.

When the mobile object is specified in step S51, the completion duration or the completion time at which the charging of the mobile object by the charger is completed is specified (step S52).

The processing of step S52 will be described. In step S52, a completion duration or a completion time at which charging of the mobile object within a predetermined range by the charger is completed is predicted based on the specified number of mobile objects. Specifically, by storing 30 minutes as the completion duration for one mobile object in the server apparatus 4 in advance, the server apparatus 4 can specify the completion duration at the charger by multiplying the specified number of mobile objects by the completion duration per mobile object. For example, in Fig. 9, since two mobile objects are specified in the region 52a, the completion duration is 60 minutes. The server apparatus 4 can calculate the charge completion time by adding the completion duration to a time at which the processing of step S52 is executed.

In step S52, it is possible to predict the completion duration or the completion time at which the charging of the mobile object by the charger within the predetermined range is completed based on the completion duration specified for each mobile object. For example, in step S5, the mobile object information is stored. The server apparatus 4 can specify the completion duration for each mobile object with reference to the mobile object information. The completion duration for each mobile object may be specified with reference to charger information regarding the charger stored in the server apparatus 4. The charger information includes, for example, a chargeable capacity per hour.

Specifically, when 40 kW is stored as an output of the charger 51a per hour in the server apparatus 4, 20 kWh is stored as a battery capacity of the mobile object 3a, and 50% is stored as a remaining battery level, a completion duration of the mobile object 3a is 15 minutes. The server apparatus 4 can specify the completion duration at the charger by calculating the completion duration for each mobile object 3 located in the region 52 and adding the completion duration for each mobile object 3.

Alternatively, the completion duration for each type of vehicle type or each type of battery is stored in association in the server apparatus 4, and the server apparatus 4 may specify the completion duration for each mobile object with reference to the mobile object information stored in step S5.

When the completion duration or the completion time is specified in step S52, the server apparatus 4 stores prediction information regarding the specified number of mobile objects and/or the completion duration or the completion time in association with the charger ID (step S53). The prediction information includes the specified number, the completion duration, and/or the completion time. The prediction information may include a completion duration or a completion time for each mobile object located within a predetermined range.

The prediction information is transmitted from the server apparatus 4 to the mobile object 3 (step S54) and is received by the mobile object 3 (step S55). In the mobile object 3, the prediction information is output (step S56). The prediction processing ends by the above processing of steps S51 to S56.

The mobile object to which the prediction information is transmitted in step S54 may be the mobile object within the predetermined range of the charger specified in step S52. The completion duration or the completion time displayed for each mobile object may be different. For example, the completion duration or the completion time of the mobile object 3a may be displayed in the case of the mobile object 3a that is being charged, and the completion duration or the completion time at which the charging by the mobile objects 3a and 3b, that is the charger 51 is completed may be displayed in the case of the mobile object 3b that is waiting.

In the output of the prediction information in step S56, text, an image, and/or a moving image may be displayed on the display screen of the mobile object 3, or a sound may be output.

In step S54, the prediction information may be transmitted to a user terminal of a user who drives another vehicle or a car navigation terminal mounted on another vehicle. The prediction information may be directly transmitted from the server apparatus 4 as in step S54, or may be browsed through a web browser or similar interface as in output processing to be described below. In the prediction processing, the processing from steps S54 to S56 may be omitted.

The system according to the present invention can accurately specify the position of the mobile object through the processing in steps S1 and S2. Therefore, since the predetermined range for each charger can be set in detail, for example, the server apparatus 4 can specify the completion duration or the completion time based on the mobile object that is being charged or waiting without determining that the mobile object 3c that has been charged is located in the region 52a.

The prediction processing may be normally executed at predetermined time intervals (for example, every 5 minutes). Alternatively, an execution frequency may be changed depending on a time zone. For example, the prediction processing may be executed every 1 minute from 8:00 AM to 8:00 PM when a traffic volume is large, and may be executed every 10 minutes from 8:00 PM to 8:00 AM on the following day when the traffic volume is small.

The execution frequency of the prediction processing may be changed in accordance with the number of installed chargers. For example, the prediction processing may be executed every 1 minute in an area where the number of installed chargers per unit area is large, and may be executed every 10 minutes in an area where the number of installed chargers is large.

Here, according to another embodiment of the present invention, in step S52, the completion duration of the mobile object corresponding to the mobile object information for which an input has been received can be predicted using a prediction model that is machine-trained using the mobile object information regarding the mobile object as input data and using the completion duration at which charging in the mobile object is completed as output data.

A prediction model according to another embodiment of the present invention will be described. The server apparatus 4 or another computer apparatus receives the mobile object information and the completion duration at which charging in the mobile object is completed. Then, the storage unit of the server apparatus 4 or another computer apparatus stores a prediction model that is machine-learned using mobile object information regarding a mobile object as input data and using a completion duration at which charging in the mobile object is completed as output data. A machine learning algorithm is not particularly limited, and a known algorithm can be used. For example, deep learning in which linear regression, multiple regression analysis, a support vector machine, a decision tree, a random forest, a multilayer neural network, or the like is used can be given.

The multilayer neural network includes an input layer, an output layer, and a plurality of intermediate layers. A weight is set to an edge connecting a node to a node in each layer. A weight corresponding to each input to the node is set to the edge, and a value obtained by multiplying each input to the node by the weight and multiplying these weights and a bias are added. Then an activity value is calculated by performing nonlinear conversion on the value obtained by the addition using an activation function. The calculated activity value is a value of an input passed to the node of the next layer. The number of intermediate layers can be appropriately designed. The weight is optimized with training data.

The mobile object information regarding the mobile object as the input data includes, for example, a capacity of a battery and a remaining level of the battery, and may further include a vehicle type of the mobile object or a type of the battery. This is because the type of battery can be specified depending on the vehicle type of mobile object. On the other hand, time information regarding a time until charging is actually completed under these conditions of the mobile object is used as the output data.

Accordingly, when the mobile object information regarding the mobile object is received, the completion duration for the mobile object can be specified by predicting the completion duration for the mobile object corresponding to the mobile object information for which the input has been received using a prediction model that is machine-learned using the mobile object information regarding the mobile object as input data and using the completion duration at which charging in the mobile object is completed as output data. The mobile object information and the charger information regarding the charger may be used as the input data. The charger information includes, for example, a chargeable capacity per hour.

While the configuration in which the predetermined range (region) is set for each charger has been described above, the predetermined range (region) may be set for each charging facility including one or a plurality of chargers. For example, in Fig. 9, one region may be set as a charging facility including the chargers 51a to 51c.

### [Output Processing]

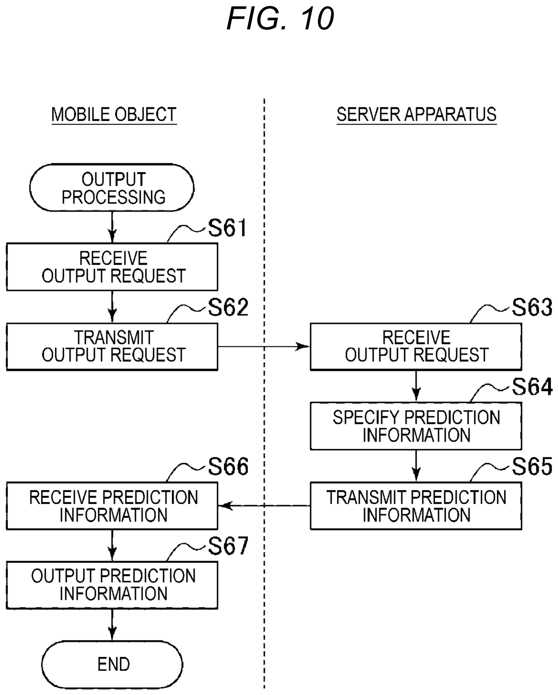

Next, output processing according to an embodiment of the present invention will be described. The output processing is processing for outputting prediction information that is the completion duration or the completion time predicted through the prediction process. In the prediction processing, the prediction information is output regardless of whether there is an output request from the user, but it can be said that the output processing is processing for outputting the prediction information in accordance with an output request from the user. Fig. 10 is a flowchart illustrating output processing according to the embodiment of the present invention.

First, the input unit 26 of the mobile object 3 receives an output request for requesting an output of the prediction information (step S61). For example, when the user presses a predetermined button displayed on the display screen of the mobile object 3, an operation input of step S61 is executed. In this case, the user may select a specific charger corresponding to the prediction information to be output. Alternatively, the user may select a predetermined range, and the mobile object 3 may output prediction information corresponding to one or a plurality of chargers in the selected predetermined range, or may output prediction information of one or a plurality of chargers in a predetermined range specified from the positional information of the mobile object 3. When the charger is specified from the positional information of the mobile object 3, the user may input the predetermined range in step S61. In this case, before the processing of step S62, the positional information of the mobile object 3 on which the output processing is executed is specified through the processing of steps S1 and S2. The specified positional information of the mobile object 3 is transmitted to the server apparatus 4 in step S62.

Subsequently, an output request is transmitted from the mobile object 3 to the server apparatus 4 (step S62) and is received by the server apparatus 4 (step S63). The server apparatus 4 specifies the prediction information corresponding to the charger included in the output request from the prediction information stored in step S53 (step S64). Note that the specified prediction information is preferably the most recently stored prediction information.

When the prediction information is specified by the server apparatus 4, the prediction information is transmitted from the server apparatus 4 to the mobile object 3 (step S65) and is received by the mobile object 3 (step S66). In the mobile object 3, the prediction information is output (step S67). Since the processing from steps S65 to S67 is similar to the processing from steps S54 to S56, detailed description thereof will be omitted. The output processing ends by the processing from steps S61 to S67.

In step S67, the positional information of the charger and the prediction information may be superimposed and displayed on the map on the display screen of the mobile object 3. When the prediction information of one or a plurality of chargers is displayed, a display mode may be changed in accordance with the specified number, the completion duration at the charger, or the completion time at the charger. For example, when the completion duration is longer than the predetermined time (for example, 40 minutes or more) or the completion time is later than the predetermined time (for example, 40 minutes or more after the display screen is displayed), the color of a region of the charger may be set to red. When the completion duration is shorter than the predetermined time (for example, 10 minutes or less) or the completion time is earlier than the predetermined time (for example, within 10 minutes from a time at which the display screen is displayed), the color of the region of the charger may be set to green. Accordingly, the user can ascertain the waiting time at the charger in advance and can select an available charger for charging the mobile object 3.

While the configuration in which the output processing is executed by the mobile object 3 and the server apparatus 4 has been described above, the output processing may be executed by the user terminal and the server apparatus 4. In this case, the user terminal may include the second device. For example, the user operates the user terminal to access a predetermined website (that is, the server apparatus 4 is accessed via the browser). Then, the processing from steps S61 to S67 may be executed.

As described above, steps S4 and S5, S51 to S54, and S63-65 are executed in the server apparatus 4, but may be executed in the first device 1. The processing of the server apparatus 4 may be executed in the mobile object 3 or the user terminal. In this case, the processing of steps S3 and S4, S54 to S55, S62 and S63, and S65 and S66 can be omitted. When processing is executed by the first device 1, the mobile object 3, or the user terminal instead of the server apparatus 4, various types of information (for example, positional information of the mobile object, mobile object information, charger information, region information, prediction information, and the like) necessary for executing the processing are stored in the first device 1, the mobile object 3, or the user terminal.

### [Billing Amount Calculation Processing]

Next, billing amount calculation processing according to the embodiment of the present invention will be described. The billing amount calculation processing is processing for calculating a billing amount for the user of the mobile object 3 based on an amount of charge by the charger. The billing amount may include, for example, a usage fee of the system 10 in addition to the billing amount calculated based on the amount of charge.

Whenever charging is executed by the charger, an amount of power used to charge the mobile object 3 or an amount of change in a remaining battery level of the mobile object 3 before and after charging (that is, the amount of charge) is transmitted from the mobile object 3 or a computer apparatus included in the charger to the server apparatus 4 in association with user identification information with which a user can be identified. In the server apparatus 4, the amount of power or the amount of change is stored in association with the user identification information. In the billing amount calculation processing, the server apparatus 4 first aggregates the amount of power or the amount of change for a predetermined period for each piece of user identification information. The predetermined period for which the amount of power or the amount of change is to be aggregated is not particularly limited. For example, the predetermined period may be the same period as a period for which a charge for a power consumption amount is billed to the user, such as one month.

Next, the server apparatus 4 calculates a billing amount in accordance with the aggregated amount of power or the aggregated amount of change. The server apparatus 4 has a fee table in which a fee is stored in association with the amount of power or the amount of change. By referring to the fee table, the server apparatus 4 can specify the billing amount corresponding to the aggregated amount of power or the aggregated amount of change. Accordingly, the server apparatus 4 can calculate the billing amount in accordance with the amount of power or the amount of change. The fee table may store a user and a system usage fee of the user, or a type of charger and a fee in association. That is, the server apparatus 4 can calculate the billing amount in accordance with a system usage fee or a type of charger.

When the server apparatus 4 calculates the billing amount, the calculated billing amount is stored in the storage unit 43 of the server apparatus 4 in association with user identification information. The stored billing amount is transmitted to the mobile object 3 or the user terminal associated with the user in response to a transmission request of the mobile object 3 or the user terminal.

In the billing amount calculation processing described above, the billing amount for the user is calculated based on the amount of power used for charging or the amount of charge actually charged. However, the server apparatus 4 may add a fee related to the amount of used power other than charging to the billing amount. The amount of power used for other than charging can be specified by, for example, a smart meter.

According to the present invention, it is possible to predict a completion duration or a completion time at which charging of a mobile object by a charger within a predetermined range related to a position of the charger is completed. Accordingly, the user can confirm a waiting time at the charger in advance. According to the present invention, since the completion duration or the completion time at which the charging of the mobile object within the predetermined range by the charger is completed is predicted based on the number of specified mobile objects, it is possible to more accurately predict the completion duration or the completion time based on the mobile object that actually executes charging and waits near the charger.

According to the present invention, since the completion duration or the completion time at which the charging of the mobile object within the predetermined range by the charger is completed is predicted based on the completion duration specified for each mobile object, it is possible to more accurately predict the completion duration or the completion time based on a state of the mobile object that is actually charged and waits near the charger.

According to the present invention, since the specified number and/or the predicted completion duration or completion time is transmitted to the first computer apparatus, the user can know a congestion state at the charger. According to the present invention, since the number of mobile objects within the predetermined range set in association with the position of the charger is specified, it is possible to predict a more accurate completion duration or completion time based on the mobile object that is actually charged and waits near the charger in accordance with a capability of the charger.

According to the present invention, since the position of the second device is specified based on a distance between each of the plurality of first devices and the second device, the position of the mobile object can be specified. According to the present invention, since the distance is calculated based on a time difference between the clock of the one first device and the clock of the second device, it is possible to specify a position of the mobile object with no error due to the time deviation.

According to the present invention, since a time in the second device is corrected based on the calculated time deviation, the position of the mobile object can be accurately specified based on the synchronized time. According to the present invention, since a phase in the second device is corrected based on the calculated phase deviation, the position of the mobile object can be accurately specified based on a time at which the phase is synchronized.

### Reference Signs List

1 First device, 2 Second device, 3 Mobile object, 4 Server apparatus, 5 Communication network, 10 System, 11 Control unit, 12 RF chip, 12a Clock, 12b Phase detector, 13 Oscillator, 21 Control unit, 22 RF chip, 22a Clock, 22b Phase detector, 23 Oscillator, 24 RAM, 25 Storage unit, 26 Input unit, 27 Display unit, 41 Control unit, 42 RAM, 43 Storage unit, 44 Communication interface, 50 Predetermined place, 51 Charger, 52 Region

## Claims

1. A system comprising at least one computer apparatus, comprising:
a position specifier that specifies a position of a mobile object; and
a predictor that predicts a completion duration or a completion time at which charging of the mobile object by a charger is completed in accordance with the specified position of the mobile object.

2. The system according to claim 1, comprising:
an object number specifier that specifies the number of mobile objects within a predetermined range set in association with a position of the charger,
wherein, based on the specified number of mobile objects, the predictor predicts the completion duration or the completion time at which the charging of the mobile object by the charger within the predetermined range is completed.

3. The system according to claim 1 or 2, wherein, based on the completion duration or the completion time specified for each mobile object, the predictor predicts the completion duration or the completion time at which the charging of the mobile object within the predetermined range by the charger is completed.

4. The system according to claim 1 or 2, comprising a transmitter that transmits the specified number of mobile objects and/or predicted completion duration or completion time to first computer apparatus.

5. The system according to claim 1 or 2, wherein the object number specifier specifies the number of mobile objects within a predetermined range defined for each charger.

6. The system according to claim 1 or 2, comprising:
an inputter that receives mobile object information regarding the mobile object,
wherein the predictor predicts the completion duration or the completion time in the mobile object corresponding to the mobile object information received as an input using a prediction model that is trained using mobile object information regarding the mobile object as input data and using the completion duration or the completion time at which charging in the mobile object is completed as output data.

7. The system according to claim 1 or 2, comprising:
a plurality of first devices,
wherein the mobile object includes a second device,
wherein the system comprises a distance calculator that calculates a distance between the second device and each of the plurality of first devices based on a propagation time of a signal or information regarding the second device and each of the plurality of first devices, and
wherein the position specifier specifies a position of the second device based on the calculated distance between the second device and each of the plurality of first devices.

8. The system according to claim 7, wherein the distance calculator calculates the distance based on a time deviation between a clock of one first device and a clock of the second device.

9. The system according to claim 7, comprising:
a time deviation calculator that calculates a time deviation between one first device and the second device by executing communication between the one first device and the second device; and
a time corrector that corrects a time in the second device based on the calculated time deviation.

10. The system according to claim 7, comprising:
a phase deviation calculator that calculates a phase deviation between a clock of one first device and a clock of the second device by executing communication between one first device and the second device; and
a phase corrector that corrects a phase in the second device based on the calculated phase deviation.

11. A method performed in a system including at least one computer apparatus, the method comprising:
a position specifying step of specifying a position of a mobile object; and
a prediction step of predicting a completion duration or a completion time at which charging of the mobile object by a charger is completed in accordance with the specified position of the mobile object.
